# EUROPÄISCHE PATENTANMELDUNG

(11) **EP 2 746 015 A2**
(43) Veröffentlichungstag der Anmeldung: **25.06.2014**
(21) Anmeldenummer: 13193312.9
(22) Anmeldetag: 18.11.2013
(51) Int. Cl.: B28B 1/50, B32B 13/04, B28B 23/00, E04C 2/04

(54) **Bewehrte Bauplatte sowie Verfahren und Vorrichtung zur Herstellung der Bauplatte**

(30) Priorität: 19.12.2012 DE 102012024885
(71) Anmelder: Xella Baustoffe GmbH, 47259 Duisburg (DE)
(72) Erfinder: Kochan, Jörg, 06333 Wiederstedt (DE); Protz, Michael, 14776 Brandenburg (DE); Naumann, Roger, 63825 Westerngrund (DE)
(74) Vertreter: Solf, Alexander

(57) **Zusammenfassung**

Die vorliegende Erfindung betrifft eine wärmedämmende Bauplatte (1), die eine äußere, monolithische Umhüllung (2) aus einem mineralisch gebundenen Hüllwerkstoff und zumindest eine in die Umhüllung (2) eingegossene, innere, quaderförmige Kernplatte (3) aufweist, die diese begrenzende Kernplattenoberflächen (7) aufweist, wobei zumindest vier, vorzugsweise zumindest fünf, Kernplattenoberflächen (7) vollständig von der Umhüllung (2) umgossen sind, und wobei die Wärmeleitfähigkeit λ des Hüllwerkstoffs höher ist als die Wärmeleitfähigkeit λ der Kernplatte (3), und wobei die Umhüllung (2) zumindest ein Bewehrungsmittel (12) aufweist, sowie eine Vorrichtung und ein Verfahren zur Herstellung der Bauplatte (1).

## Beschreibung

Die vorliegende Erfindung betrifft eine bewehrte, wärmedämmende Bauplatte mit guten Festigkeitseigenschaften sowie ein Verfahren und eine Vorrichtung zur Herstellung der Bauplatte.

Aus der EP 2 070 671 A1 ist ein Verfahren zur Herstellung von mehrschichtigen, sandwichartigen Bauplatten bekannt, die jeweils aus zumindest zwei Schichten aus Porenbeton bestehen. Die beiden fest miteinander verbundenen Schichten weisen unterschiedliche Rohdichten auf. Zur Herstellung der Bauplatten werden bereits gehärtete Platten aus Porenbeton voneinander beabstandet in eine Gießform eingehängt. Zweckmäßigerweise werden zudem Bewehrungsmittel eingehängt. Anschließend wird die Gießform mit Porenbetonfrischmasse befüllt und diese treiben und ansteifen gelassen. Sobald die Porenbetonmasse ausreichend angesteift ist, wird der grüne Porenbetonkuchen entformt und in an sich bekannter Weise in die einzelnen sandwichartigen Bauplatten geschnitten. Die grünfesten Bauplatten werden anschließend im Autoklaven gehärtet.

Die EP 2 395 171 A1 offenbart eine mineralische monolithische mehrschichtige wärmedämmende Bauplatte, die mindestens drei Schichten aus Porenbeton aufweist. Dabei weisen die beiden äußeren Schichten eine höhere Rohdichte auf als die innere Schicht. Zudem sind die Schichten jeweils in einer Grenzzone untereinander durch eine Calciumsilikathydratphasenverwachsungsbindung und eine mechanische Porenbetonmaterialverkrallungsverbindung miteinander verbunden. Die mechanische Materialverkrallung resultiert aus in Makroporen der Grenzzonen der inneren Schicht eingreifendem Porenbetonmaterial der äußeren Schichten.

Die Herstellung der Bauplatte erfolgt durch Aufstellen von mindestens zwei ausgehärteten Porenbetonplatten aus einem Porenbetonmaterial mit den Merkmalen der inneren Schicht in einer quaderförmigen, nach oben offenen Porenbetongießform. Die ausgehärteten Porenbetonplatten werden dabei auf Abstand nebeneinander und im Abstand jeweils von der benachbarten Seitenwand auf den Boden der Gießform hochkant aufgestellt. Danach wird die Porenbetongießmasse für die äußeren Schichten in den Zwischenraum der Porenbetonplatten und jeweils in den Zwischenraum zwischen der Porenbetonplatte und der Seitenwand der Gießform eingefüllt. Nach dem Ansteifen der Gießmasse wird der Porenbetonkuchen entformt, gegebenenfalls geschnitten und die Gießmasse in einem Autoklaven gehärtet.

Die CH 421 450 A offenbart einen ummantelten Leichtbaustein mit einem einteiligen Kern aus Gas- oder Schaumbeton, wobei vier seiner Außenseiten zusammenhängend aus einem Material gebildet sind, dessen Druckfestigkeit größer ist als diejenige des Kernmaterials. Die Herstellung des Leichtbausteins erfolgt dadurch, dass zuerst, in einem separaten Arbeitsgang, die Ummantelung in Form eines mindestens vierseitig geschlossenen Rahmens hergestellt wird, in welchen nach erfolgtem Abbinden der Kern eingegossen wird, welcher durch sein Abbinden sich mit der Ummantelung zu einem kompakten Element verbindet.

Aufgabe der vorliegenden Erfindung ist die Bereitstellung einer gegossenen, mineralischen Bauplatte, die zugleich gute Wärmedämmeigenschaften als auch gute Festigkeitseigenschaften aufweist und einfach und kostengünstig herstellbar ist.

Weitere Aufgabe ist die Bereitstellung eines Verfahrens und einer Vorrichtung zur Herstellung der Bauplatte.

Diese Aufgaben werden durch eine Bauplatte mit den Merkmalen von Anspruch 1, ein Verfahren mit den Merkmalen von Anspruch 18 und eine Vorrichtung mit den Merkmalen von Anspruch 23 gelöst.

Im Folgenden wird die Erfindung anhand einer Zeichnung beispielhaft näher erläutert. Es zeigen:
- Figur 1:: Eine schematische, perspektivische Ansicht einer erfindungsgemäßen Bauplatte
- Figur 2:: Schematisch einen mittigen Längsschnitt der Bauplatte gemäß Figur 1
- Figur 3:: Schematisch einen Querschnitt einer Bauplatte gemäß einer weiteren Ausführungsform
- Figur 4:: Schematisch einen Querschnitt einer Bauplatte gemäß einer weiteren Ausführungsform
- Figur 5:: Schematisch einen Querschnitt einer Bauplatte gemäß einer weiteren Ausführungsform
- Figur 6:: Schematisch einen Querschnitt einer Gießform mit darin eingehängten Bewehrungskörben und Kernplatten
- Figur 7:: Schematisch einen Querschnitt einer Gießform mit darin eingehängten Bewehrungskörben und Kernplatten mit einem ersten Teil an Frischmasse

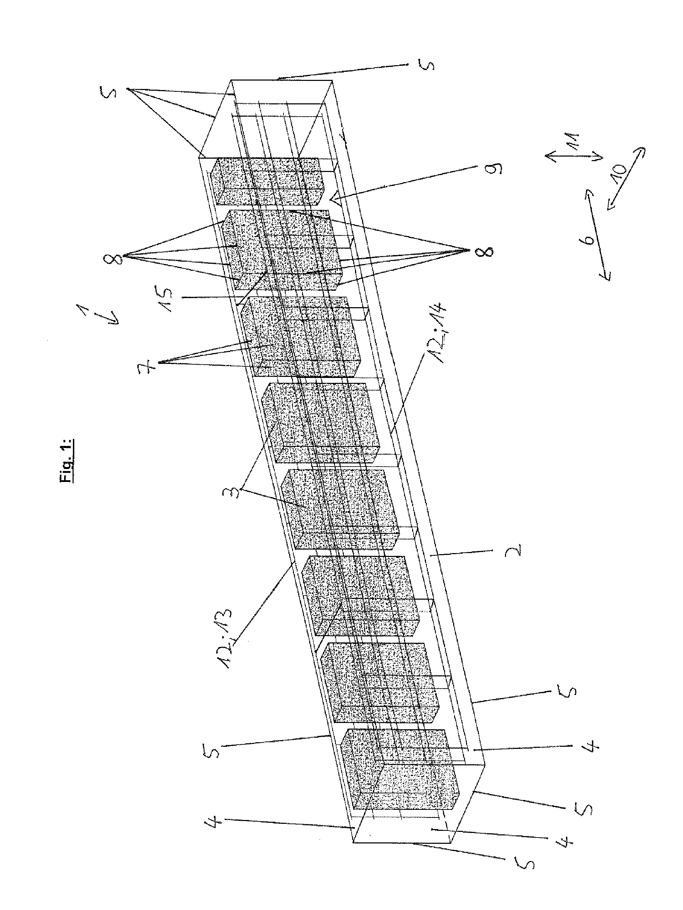

Die erfindungsgemäße Bauplatte 1 (Fig. 1-5) weist eine äußere Hülle bzw. Umhüllung 2 aus einem mineralisch gebundenen Hüllwerkstoff auf, in die mindestens eine Kernplatte 3 aus wärmedämmendem Kernmaterial eingegossen ist. Eingegossen meint dabei, dass die aus erhärtetem, festen Kernmaterial bestehende Kernplatte 3 von der Umhüllung 2 umgossen ist. Die Wärmeleitfähigkeit λ des Hüllwerkstoffs ist gemäß der Erfindung höher als die Wärmeleitfähigkeit λ der Kernplatte. Des Weiteren ist die Kernplatte 3 vollständig bzw. allseitig von der Umhüllung 2 umschlossen und umgossen bzw. in diese eingebettet.

Die Bauplatte 1 ist quaderförmig ausgebildet und weist insgesamt sechs, insbesondere ebenflächige, Plattenoberflächen bzw. Plattenaußenflächen 4 auf, welche die Bauplatte 1 nach außen begrenzen. Bauplatte im Sinne der Erfindung ist somit jeder quaderförmige Körper. Die einzelnen Plattenaußenflächen 4 gehen jeweils über Plattenkanten 5 ineinander über und sind paarweise zueinander senkrecht. Vorzugsweise weist die Bauplatte 1 eine Längserstreckung in eine Platten längsrichtung 6 auf.

Wie bereits erläutert, weist die erfindungsgemäße Bauplatte 1 in ihrem Inneren mindestens eine, vorzugsweise mehrere, Kernplatten 3 auf. Die Kernplatten 3 sind jeweils quaderförmig ausgebildet und weisen jeweils sechs zueinander paarweise senkrechte, insbesondere ebenflächige, Kernplattenoberflächen 7 auf. Die einzelnen Kernplattenoberflächen 7 begrenzen die jeweilige Kernplatte 3 zur Umhüllung 2 hin. Jeweils zwei Kernplattenoberflächen 7 gehen über eine Kernplattenkante 8 ineinander über. Erfindungsgemäß sind dabei zumindest vier zueinander paarweise benachbarte Kernplattenoberflächen 7 vollständig von dem Hüllwerkstoff bedeckt und umgossen (nicht dargestellt). Vorzugsweise sind aber insbesondere fünf, bevorzugt alle, Kernplattenoberflächen 7 vollständig von dem Hüllwerkstoff bedeckt und umgossen.

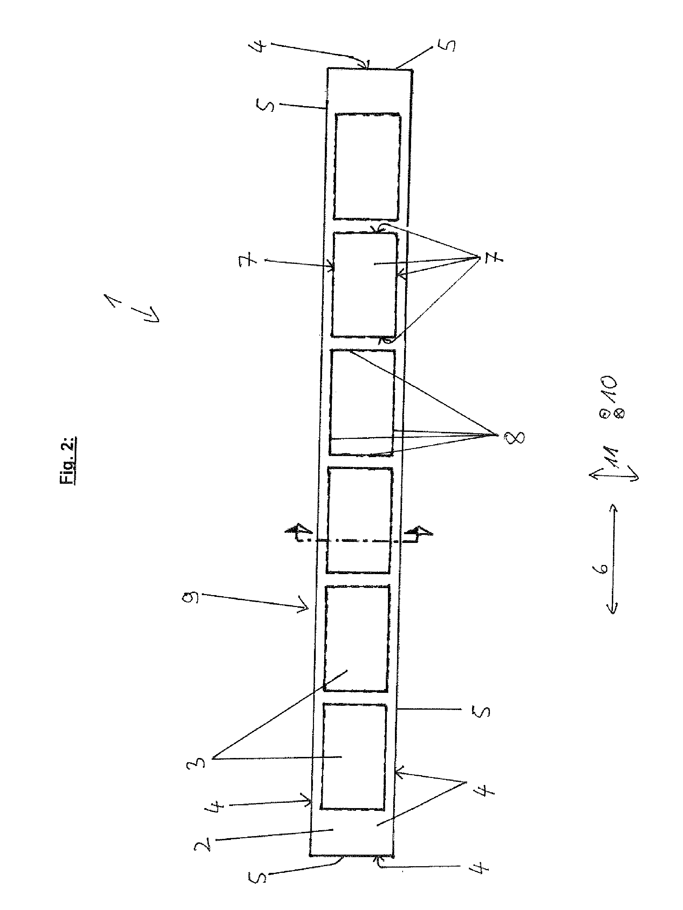

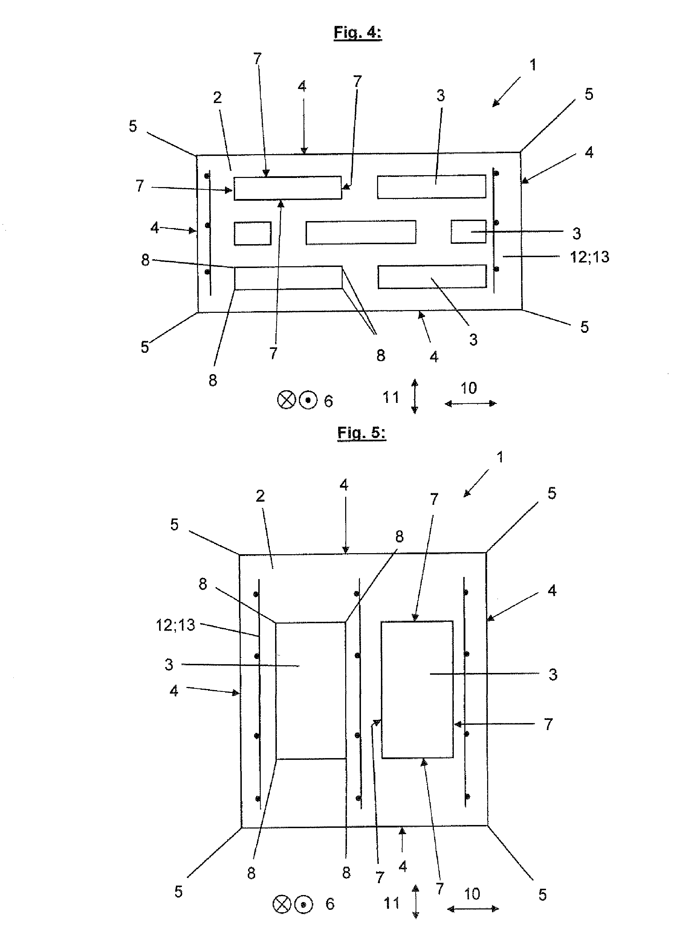

Die einzelnen Kernplatten 3 sind vorzugsweise in Plattenlängsrichtung 6 hintereinander und bevorzugt zueinander fluchtend angeordnet (Fig. 1 und 2). Sie bilden eine Kernplattenreihe 9. Dabei sind die Kernplattenoberflächen 7 paarweise parallel zu den Plattenaußenflächen 4. Das heißt, jeweils eine Kernplattenoberfläche 7 ist parallel zu einer Plattenaußenfläche 4. Die Bauplatte 1 kann aber auch mehrere Kernplattenreihen 9 aufweisen. Beispielsweise sind mehrere Kernplattenreihen 9 in einer zur Plattenlängsrichtung 6 senkrechten Plattenbreitenrichtung 10 (Fig. 4, 5) und/oder in einer zur Plattenlängsrichtung 6 und zur Plattenbreitenrichtung 10 senkrechten Plattenhöhenrichtung 11 (Fig. 4) nebeneinander bzw. zueinander benachbart angeordnet.

Anstelle der hintereinander angeordneten Kernplatten 3 kann die erfindungsgemäße Bauplatte 1 auch in Plattenlängsrichtung 6 gesehen lediglich eine einzige Kernplatte 3 aufweisen (nicht dargestellt), die sich nahezu über die gesamte Länge der Bauplatte 1 erstreckt. Die Kernplatte 3 muss dabei nicht unbedingt mittig in Bezug zur Plattenbreitenrichtung und/oder Plattenhöhenrichtung 10;11 angeordnet sein. Es können zudem auch mehrere derartiger Kernplatten 3 in Plattenbreitenrichtung und/oder -höhenrichtung 10;11 nebeneinander angeordnet sein.

Um einen ausreichenden Schutz der Kernplatten 3 zu gewährleisten, beträgt die Deckung, also der minimale Abstand der Kernplatten 3 zu den Plattenoberflächen 7 vorzugsweise 7 mm, bevorzugt 15 mm.

Vorzugsweise sind die Kernplatten 3 außermittig im Sinne einer nach außen gewandten Dämmlage angeordnet.

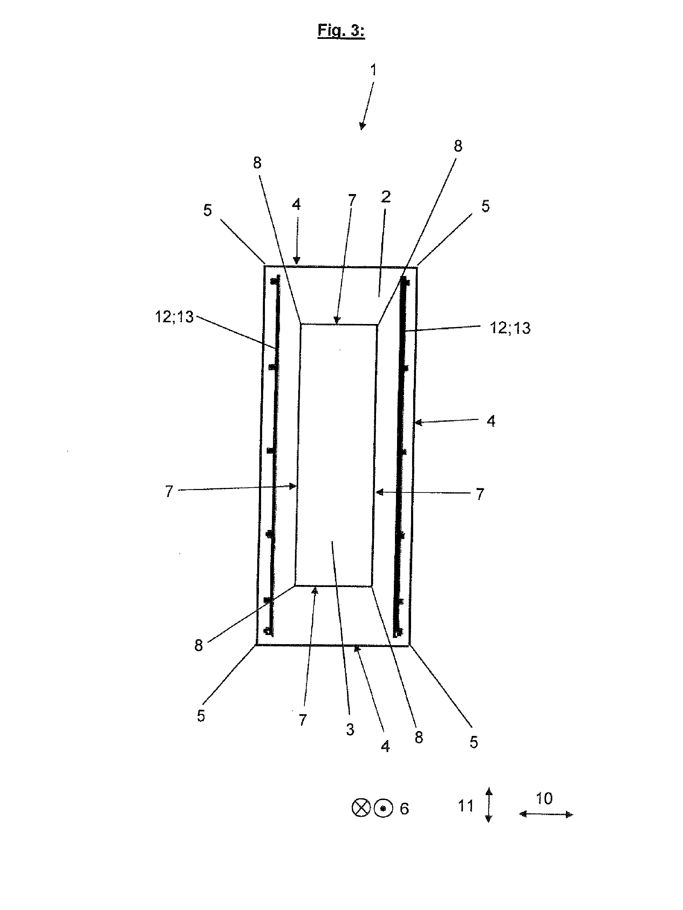

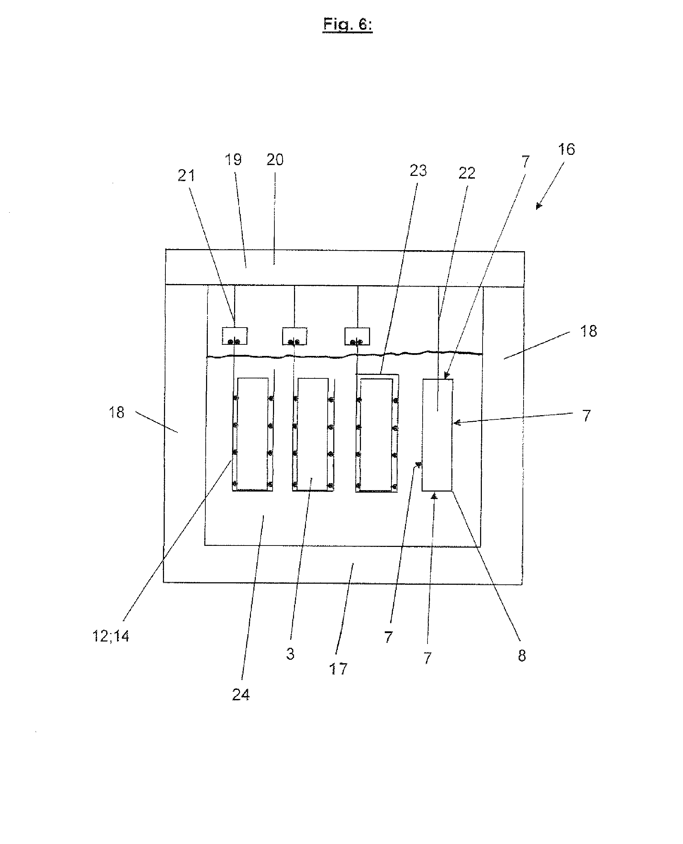

Die erfindungsgemäße großformatige Bauplatte 1 weist zudem zumindest ein Bewehrungsmittel 12, insbesondere eine Bewehrungsmatte 13 (Fig. 1 und 3) und/oder einen Bewehrungskorb 14 (Fig. 6) und/oder einen Bewehrungsstab auf. Das Bewehrungsmittel 12 ist ebenfalls in die Umhüllung 2 eingegossen. Die flächigen Bewehrungsmatten 13 sind bevorzugt benachbart zu den Kernplattenoberflächen 7 angeordnet. Insbesondere ist jeweils zumindest eine Bewehrungsmatte 13 zwischen einer Plattenaußenfläche 4 und den Kernplattenoberflächen 7 der Kernplatten 3 einer Kernplattenreihe 9 angeordnet (Fig. 1). Die einzelnen Bewehrungsmatten bzw. -körbe 13; 14 können zudem mittels Bewehrungsquerstäben 15 miteinander verbunden sein.

Bei dem mineralisch gebundenen Hüllwerkstoff der Umhüllung 2 handelt es sich vorzugsweise um Beton, insbesondere um Schwerbeton, Normalbeton oder Leichtbeton, hochfestem (HPC) oder ultrahochfestem (UHPC) Beton. Andere zementgebundene Hüllwerkstoffe sind ebenfalls möglich. Bei Leichtbeton unterscheidet man zwischen gefügedichtem Leichtbeton mit Kornporosität (Konstruktionsleichtbeton) gemäß DIN 1045-2, haufwerksporigem Leichtbeton und Porenleichtbeton (Schaumbeton) und Porenbeton. Die Mischungszusammensetzung von gefügedichtem Leichtbeton entspricht der von Normalbeton. Es werden lediglich leichte Gesteinskörnungen verwendet. Gefügedichter Leichtbeton weist eine Trockenrohdichte ρ₀ zwischen 800 und 2000 kg/m³ auf. Bei haufwerksporigem Leichtbeton wird die Gesteinskörnung so ausgewählt, dass möglichst viel Hohlraum zwischen den Zuschlagkörnern entsteht. Die Zementleimmenge wird so dosiert, dass die einzelnen Zuschlagkörner nur umhüllt und punktweise verkittet werden. Im Rahmen einer bevorzugten Ausführungsform wird Schaumbeton und/oder Porenbeton verwendet. Schaumbeton wird unter Verwendung von Schaum- und/oder Luftporenbildnern hergestellt. In einem Schaumgerät wird mittels eines Schaumbildners und Wasser ein stabiler Schaum erzeugt, der dann dem Frischmörtel bzw. Frischbeton zugemischt wird. Porenbeton wird hergestellt aus einer Mischung aus Quarzsand, Zement und/oder Kalk als Bindemittel und Wasser. Als Treibmittel wird zur Porenbildung in geringen Mengen Aluminiumpulver und/oder -paste eingesetzt. Nach dem Treibvorgang erfolgt eine Dampfhärtung im Autoklaven. Wird anstelle des Treibmittels zur Erzeugung der Poren ein vorgefertigter Schaum untergemischt, handelt es sich ebenfalls um Schaumbeton.

Die Trockenrohdichte ρ₀ der Umhüllung 2 liegt vorzugsweise bei 250 bis 2800 kg/m³, bevorzugt 400 bis 2000 kg/m³. Im Fall von Porenbeton oder Schaumbeton liegt die Trockenrohdichte ρ₀ des Hüllwerkstoffs vorzugsweise bei 250 bis 800 kg/m³, bevorzugt 300 bis 600 kg/m³. Und die Wärmeleitfähigkeit λ des Hüllwerkstoffs liegt allgemein vorzugsweise bei 0,07 bis 2,1 W/mK, bevorzugt 0,1 bis 1,0 W/mK. Im Fall von Porenbeton oder Schaumbeton liegt die Wärmeleitfähigkeit λ des Hüllwerkstoffs vorzugsweise bei 0,07 bis 0,2 W/mK, bevorzugt 0,07 bis 0,14 W/mK.

Wie bereits erläutert ist die Wärmeleitfähigkeit λ der Kernplatten 3 geringer als die Wärmeleitfähigkeit λ der Umhüllung 2. Bei den Kernplatten 3 handelt es sich um Wärmedämmplatten mit geringer Festigkeit. Die Wärmeleitfähigkeit λ der Kernplatten 3 beträgt vorzugsweise 0,004 bis 0,05 W/mK, bevorzugt 0,025 bis 0,045 W/mK.

Beispielsweise bestehen die Kernplatten 3 aus Hartschaumstoff, insbesondere aus PUR (Polyurethan) und/oder XPS (Polystyrol). Bevorzugt handelt es sich allerdings um mineralische Wärmedämmplatten, insbesondere aus Mineralwolle oder aus Aerogel oder aus gefällter (hoch disperser) Kieselsäure oder aus pyrogener Kieselsäure oder aus gehärtetem Leichtbeton (siehe oben), insbesondere aus Porenbeton. Besonders gut geeignet sind auch Vakuumisolationspaneele (VIP). Vakuumisolationspaneele weisen einen Stützkern auf, der aus einem porösen, insbesondere pulverförmigen Dämmstoff, z.B. gefällter (hoch disperser) Kieselsäure oder pyrogener Kieselsäure oder Aerogel, besteht, der mehrlagig mit luftdichten Folien ummantelt ist. Seine Festigkeit und Steifigkeit erhält ein Vakuumisolationspaneel (VIP) durch das bestehende Vakuum und den Druck auf die Folie. Die Folien sind mit Metallen bedampfte Kunststofffolien oder Laminate aus verschweißten Metall- und Kunststofffolien. Bei den Kernplatten 3 kann es sich auch um Sandwichplatten handeln.

Die Trockenrohdichte ρ₀ der Kernplatten 3 ist ebenfalls geringer als die Trockenrohdichte ρ₀ des Hüllwerkstoffes. Die Trockenrohdichte ρ₀ der Kernplatten 3 liegt vorzugsweise bei 1 bis 150 kg/m³, bevorzugt 20 bis 120 kg/m³. Im Fall von Porenbeton oder Schaumbeton liegt die Trockenrohdichte ρ₀ der Kernplatten 3 vorzugsweise bei 70 bis 150 kg/m³, bevorzugt 80 bis 120 kg/m³. Die Druckfestigkeit der Kernplatten 3 ist zudem sehr gering.

Die Herstellung der erfindungsgemäßen bewehrten Bauplatte 1 erfolgt vorzugsweise in einer quaderförmigen, wannenförmigen nach oben offenen Gießform 16 (Fig. 6). Die Gießform 16 weist in an sich bekannter Weise eine plattenförmige Bodenwandung 17, zwei plattenförmige Seitenwandungen 18 und zwei plattenförmige Stirnwandungen (nicht dargestellt) auf. Auf die Gießform 16 ist ein an sich bekannter Halterahmen 19 zum Halten der Bewehrungsmittel 12 aufgesetzt. Der Halterahmen 19 stützt sich auf den beiden Seitenwandungen 18 ab und weist mehrere, die Gießform 16 überspannende Haltebalken 20 auf. Die Haltebalken 20 weisen sich in die Gießform 16 hinein erstreckende, an sich bekannte, bevorzugt klemmende, Bewehrungshaltemittel 21 zum Halten der Bewehrungsmittel 12 auf. Des Weiteren weisen die Haltebalken 20 weitere Plattenhaltemittel 22 zum Halten und Fixieren der Kernplatten 3 in der Gießform 16 auf.

Bei der Herstellung werden zunächst die Bewehrungsmittel 12 an den Bewehrungshaltemitteln 21 befestigt. Außerdem werden die Kernplatten 3 an den Plattenhaltemitteln 22 befestigt. Gemäß einer bevorzugten Ausführungsform (Fig. 6) werden die Kernplatten 3 jeweils in die Bewehrungskörbe 14 eingelegt. In diesem Fall müssen die Kernplatten 3 nur noch derart zusätzlich fixiert werden, dass sie nicht auftreiben. Sie müssen also lediglich noch mittels der Plattenhaltemittel 22 niedergehalten werden. Die zusätzlichen Plattenhaltemittel 22 am Haltebalken 20 können gegebenenfalls entfallen, wenn beispielsweise ein Quersteg 23 an dem Bewehrungskorb 14 vorhanden ist, der den Bewehrungskorb 14 nach oben abschließt, so dass die Kernplatte 3 nicht mehr nach oben aus dem Bewehrungskorb 14 entweichen kann. In diesem Fall stellen die Bewehrungskörbe 14 mit den Bewehrungshaltemitteln 21 die Plattenhaltemittel dar. Der mit den Bewehrungsmitteln 12 und den Kernplatten 3 bestückte Halterahmen 19 wird zur Gießform 16 transportiert und auf diese derart aufgesetzt, dass die Bewehrungsmittel 12 und die Kernplatten 3 in die Gießform 16 hinein hängen und von allen Wandungen 17;18 der Gießform 16 beabstandet sind. Anschließend wird die Gießform 16 mit der entsprechenden, gießfähigen Frischmasse 24 des jeweiligen Hüllwerkstoffes befüllt. Handelt es sich bei der Frischmasse 24 um Frischbeton oder Frischmörtel ohne Treibmittel wird die Gießform 16 soweit befüllt, dass alle Kernplatten 3 von der Frischmasse 24 vollständig umgeben sind (Fig. 6). Handelt es sich bei der Frischmasse 24 um Porenbetonfrischmasse, wird gegebenenfalls nicht soweit befüllt, dass alle Kernplatten 3 vollständig in die Frischmasse 24 eingebettet sind. Allerdings muss so viel Porenbetonfrischmasse eingefüllt werden, dass sichergestellt ist, dass nach dem Auftreiben der Porenbetonfrischmasse alle Kernplatten 3 vollständig in die Frischmasse 24 eingebettet sind. Alternativ können die Kernplatten 3 direkt in der Gießform 16 positioniert und mit den Plattenhaltemitteln 22 fixiert werden.

Nach dem Befüllen der Gießform 16 wird die Frischmasse 24 für bestimmte Zeit ansteifen und gegebenenfalls auftreiben gelassen, bis sie eine ausreichende Grünstandsfestigkeit erreicht hat. Anschließend werden die Bewehrungsmittel 12 von den Bewehrungshaltemitteln 21 gelöst, die Kernplatten 3 von den Plattenhaltemitteln 22 gelöst und der grüne Bauplattenrohling entformt. Nach dem Entformen wird vorzugsweise die Oberseite des Bauplattenrohlings begradigt und dieser gegebenenfalls in einzelne quaderförmige, Bauplattenrohlinge geschnitten. Dabei wird jeweils so geschnitten, dass die Kernplatten 3 zumindest nicht vollständig frei gelegt werden. Erfindungsgemäß wird so geschnitten, dass zumindest vier Kernplattenoberflächen 7 von Hüllwerkstoff umschlossen sind. Vorzugsweise sind die Kernplatten 3 vollständig umschlossen. In diesem Fall werden die Kernplatten 3 selber nicht geschnitten. Das Schneiden erfolgt in an sich bekannter Weise z.B. bei Poren- oder Schaumbeton als Hüllwerkstoff mittels Schneiddrähten.

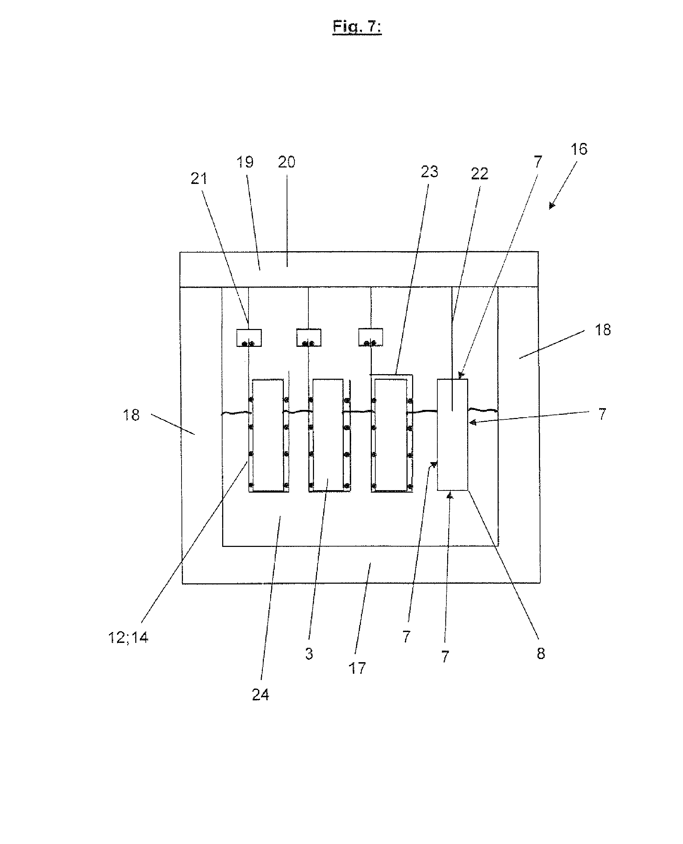

Zur Verringerung des Auftriebs und aus anderen technologischen Gründen, kann es zweckmäßig sein, den Prozess zweistufig auszuführen (Doppelguss). Im ersten Prozessschritt werden die Kernplatten 3 nur in ihrem unteren Teilbereich, also nur teilweise, eingegossen (Fig. 7). Die Kernplatten 3 werden also nicht mit Frischmasse 24 bedeckt. Deshalb wirkt nur ein geringerer Auftrieb. Im Fall von Porenbeton wird insbesondere lediglich so viel Frischmasse 24 eingefüllt, dass diese auch nach einem Auftreiben der Frischmasse 24 die Kernplatten 3 nicht bedeckt. Hat die Frischmasse 24 eine ausreichende Festigkeit erreicht, um die Kernplatten 3 und die Bewehrungsmittel 12 zu fixieren, werden die Plattenhaltemittel 22 und die Bewehrungshaltemitteln 21 gelöst und die restliche Frischmasse 24 eingefüllt. Die Kernplatten 3 werden dabei unten durch den bereits angesteiften unteren Teil der Frischmasse 24 gehalten. Die Kernplatten 3 sind somit in den bereits angesteiften unteren Teil der Frischmasse 24 eingespannt. Der bereits angesteifte untere Teil der Frischmasse 24 verhindert ein Unterfließen der Kernplatten 3 mit frischer Frischmasse 24. Anschließend wird der zweite Teil der Frischmasse 24 ansteifen und gegebenenfalls treiben gelassen. Hat auch der zweite Teil der Frischmasse 24 seine Grünstandsfestigkeit erreicht, wird der Bauplattenrohling entformt und wie oben beschrieben begradigt und gegebenenfalls geschnitten. Bei diesem Verfahren ist vorteilhaft, dass die keine Öffnungen aufgrund der Plattenhaltemittel 22 und/oder Bewehrungshaltemittel 21 zurück bleiben.

Nach dem Entformen wird der ungeschnittene Bauplattenrohling bzw. werden die geschnittenen Bauplattenrohlinge 1 erhärten gelassen. Besteht die Umhüllung aus Porenbeton oder Schaumbeton wird im Autoklaven dampfgehärtet. Dies ist allerdings nur bei Kernplatten 3 möglich, deren Kernmaterial ausreichend temperatur- und druckbeständig ist. Vorzugsweise bestehen auch die Kernplatten 3 in diesem Fall aus Porenbeton oder Schaumbeton. Ansonsten erfolgt das Erhärten vorzugsweise ohne Dampfdruck. Das Erhärten des ungeschnittenen Bauplattenrohlings kann zudem auch in der Gießform erfolgen. Zudem kann der ungeschnittene Bauplattenrohling auch nach dem Erhärten, insbesondere nach dem Autoklavieren, in einzelne erfindungsgemäße, Bauplatten 1 aufgeteilt werden.

Im Rahmen der Erfindung liegt es selbstverständlich auch, in der Form zu härten und erst anschließend zu entformen.

Die erfindungsgemäßen großformatigen Bauplatten 1 werden z.B. als Wand- oder Decken oder Dachplatten verwendet. Sie weisen vorzugsweise folgende Abmessungen auf:
Länge: zwischen 100 und 850 cm, insbesondere zwischen 250 und 650 cm
Breite: zwischen 40 und 100 cm, insbesondere zwischen 50 und 80 cm
Höhe: zwischen 15 und 60 cm, insbesondere zwischen 25 und 50 cm

Die Herstellung der erfindungsgemäßen Bauplatte 1 kann zudem auch in analoger Weise wie eine herkömmliche Betonsteinherstellung erfolgen, wenn der Hüllwerkstoff aus Beton besteht. Das heißt, das Hüllmaterial wird in die jeweilige Form eingegossen und, insbesondere durch Rütteln und/oder Pressen der eingefüllten Frischmasse, verdichtet. Die Konsistenz der Frischmasse kann dabei erdfeucht sein. Die Kernplatten 3 und die Bewehrungsmittel 12 werden dabei ebenfalls in analoger Weise wie zuvor beschrieben in der Form gehalten.

Vorteil der erfindungsgemäßen Bauplatte 1 ist zum einen, dass die wärmedämmenden Kernplatten 3, die eine sehr geringe Festigkeit aufweisen, durch die einstückige, monolithische Umhüllung 2 hervorragend geschützt und stabilisiert sind. Sie können nicht durch äußeren Einfluss mechanisch beschädigt werden und sind dadurch gut handlebar. Zudem weist die erfindungsgemäße Bauplatte 1 trotz der geringen Festigkeit der einzelnen Kernplatten 3 eine gute Biegezug- und Druckfestigkeit bei geringer Rohdichte auf. Infolgedessen kann die erfindungsgemäße Bauplatte 1 trotz ihrer geringen Rohdichte als tragender Mauerstein verwendet werden. Außerdem weist die erfindungsgemäße Bauplatte 1 aufgrund der Kernplatten 3 eine geringe Wärmeleitfähigkeit λ und somit hervorragende Wärmedämmeigenschaften auf. Der gemittelte U-Wert der erfindungsgemäßen Bauplatte 1 liegt vorzugsweise bei 0,15 bis 0,35 W/m²K.

Des Weiteren ist der Verbund von Kernplatten 3 und Umhüllung 2 durch das Eingießen sehr gut. Durch einen nachfolgenden Verdichtungsschritt, z.B. durch Rütteln oder Pressen der eingefüllten Frischmasse, kann der Verbund noch verbessert werden. Je nach Rauigkeit der Kernplattenoberflächen 7 ist der Hüllwerkstoff nach dem Aushärten mehr oder weniger stark mechanisch in den Kernplattenoberflächen 7 verkrallt. Weisen die Kernplatten 3 zu den Kernplattenoberflächen 7 hin offene Poren auf (z.B. bei Porenbeton), fließt die Frischmasse 24 zudem in diese Poren hinein, was nach dem Aushärten zu einer zusätzlichen mechanischen Verkrallung des Hüllwerkstoffes in die Kernplatten 3 führt. Bestehen sowohl die Kernplatten 3 als auch die Umhüllung 2 aus Porenbeton, bilden sich in den Poren beim Autoklavieren auch dort Calciumsilikathydratphasen, was zusätzlich zur mechanischen Verkrallung zu einer mineralischen Verwachsung der Platten miteinander in dieser Übergangszone führt. Die Umhüllung 2 und die Kernplatten 3 sind dann zusätzlich mineralisch durch mineralische Calciumsilikathydratphasenverwachsungen miteinander verbunden. Der gute Verbund sorgt unter anderem für die guten Festigkeitseigenschaften der erfindungsgemäßen Bauplatte 1.

Die Herstellung der erfindungsgemäßen Bauplatte 1 ist zudem sehr einfach und kostengünstig. Ein zusätzlicher Prozessschritt der Fertigung von Kammern zum Einbringen der Wärmedämmplatten und anschließendes Verkleben entfällt. Insbesondere bei Vakuumpaneelen ist dieser zusätzliche Prozessschritt zudem oft schwierig, da diese sehr leicht beschädigt werden. Auch sind selbst größere Toleranzen bei den Abmessungen der inneren Kernplatten 3 unschädlich. Die Kernplatten 3 werden beim Gießen trotzdem immer formschlüssig in die Umhüllung 2 eingebettet.

Des Weiteren können je nach gewünschtem Einsatzzweck auf einfache Weise Bauplatten 1 unterschiedlicher Abmessungen und Eigenschaften hergestellt werden. Die Eigenschaften können insbesondere durch die Größe, Art, Anordnung und Anzahl der Kernplatten 3 variiert werden.

## Patentansprüche

1. Wärmedämmende Bauplatte (1),
**dadurch gekennzeichnet, dass**
die Bauplatte (1) eine äußere, monolithische Umhüllung (2) aus einem mineralisch gebundenen Hüllwerkstoff und zumindest eine in die Umhüllung (2) eingegossene, innere, quaderförmige Kernplatte (3) aufweist, die diese begrenzende Kernplattenoberflächen (7) aufweist, wobei zumindest vier, vorzugsweise zumindest fünf, Kernplattenoberflächen (7) vollständig von der Umhüllung (2) umgossen sind, und wobei die Wärmeleitfähigkeit λ des Hüllwerkstoffs höher ist als die Wärmeleitfähigkeit λ der Kernplatte (3), und wobei die Umhüllung (2) zumindest ein Bewehrungsmittel (12) aufweist.

2. Wärmedämmende Bauplatte (1) nach Anspruch 1,
**dadurch gekennzeichnet, dass**
alle Kernplattenoberflächen (7) vollständig von der Umhüllung (2) umgossen sind.

3. Wärmedämmende Bauplatte (1) nach Anspruch 1 oder 2,
**dadurch gekennzeichnet, dass**
die Wärmeleitfähigkeit λ des Hüllwerkstoffs 0,07 bis 2,1 W/mK, bevorzugt 0,1 bis 1,0 W/mK beträgt.

4. Wärmedämmende Bauplatte (1) nach einem der vorhergehenden Ansprüche,
**dadurch gekennzeichnet, dass**
die Wärmeleitfähigkeit λ der Kernplatte(n) (3) 0,004 bis 0,05 W/mK, bevorzugt 0,025 bis 0,045 W/mK beträgt.

5. Wärmedämmende Bauplatte (1) nach einem der vorhergehenden Ansprüche,
**dadurch gekennzeichnet, dass**
die Trockenrohdichte ρ₀ des Hüllwerkstoffs höher ist als die Trockenrohdichte ρ₀ der Kernplatte(n) (3).

6. Wärmedämmende Bauplatte (1) nach einem der vorhergehenden Ansprüche,
**dadurch gekennzeichnet, dass**
die Trockenrohdichte ρ₀ des Hüllwerkstoffs 250 bis 2800 kg/m³, bevorzugt 400 bis 2000 kg/m³ beträgt.

7. Wärmedämmende Bauplatte (1) nach einem der vorhergehenden Ansprüche,
**dadurch gekennzeichnet, dass**
die Trockenrohdichte ρ₀ der Kernplatte(n) (3) 1 bis 150 kg/m³, bevorzugt 20 bis 120 kg/m³ beträgt.

8. Wärmedämmende Bauplatte (1) nach einem der vorhergehenden Ansprüche,
**dadurch gekennzeichnet, dass**
die Bauplatte (1) quaderförmig ausgebildet ist und sechs Plattenaußenflächen (4) aufweist.

9. Wärmedämmende Bauplatte (1) nach einem der vorhergehenden Ansprüche,
**dadurch gekennzeichnet, dass**
eine Kernplatte (3) jeweils sechs zueinander paarweise senkrechte, insbesondere ebenflächige, Kernplattenoberflächen (7) aufweist, wobei vorzugsweise die Kernplattenoberflächen (7) paarweise parallel zu den Plattenaußenflächen (4) sind.

10. Wärmedämmende Bauplatte (1) nach einem der vorhergehenden Ansprüche,
**dadurch gekennzeichnet, dass**
die Bauplatte (1) mehrere Kernplatten (3) aufweist, die in eine Plattenlängsrichtung (6) hintereinander und zueinander fluchtend angeordnet sind und eine Kernplattenreihe (9) bilden.

11. Wärmedämmende Bauplatte (1) nach Anspruch 10,
**dadurch gekennzeichnet, dass**
die Bauplatte (1) mehrere Kernplattenreihen (9) aufweist, wobei mehrere Kernplattenreihen (9) in einer zur Plattenlängsrichtung (6) senkrechten Plattenbreitenrichtung (10) und/oder in einer zur Plattenlängsrichtung (6) und zur Plattenbreitenrichtung (10) senkrechten Plattenhöhenrichtung (11) zueinander benachbart angeordnet sind.

12. Wärmedämmende Bauplatte (1) nach einem der vorhergehenden Ansprüche,
**dadurch gekennzeichnet, dass**
der mineralisch gebundene Hüllwerkstoff der Umhüllung (2) Beton, insbesondere Leichtbeton, bevorzugt Konstruktionsleichtbeton oder Schaumbeton oder Porenbeton ist.

13. Wärmedämmende Bauplatte (1) nach einem der vorhergehenden Ansprüche,
**dadurch gekennzeichnet, dass**
der mineralisch gebundene Hüllwerkstoff der Umhüllung (2) hochfester (HPC) oder ultrahochfester (UHPC) Beton ist.

14. Wärmedämmende Bauplatte (1) nach einem der vorhergehenden Ansprüche,
**dadurch gekennzeichnet, dass**
die Kernplatten (3) aus Hartschaumstoff, insbesondere aus PUR (Polyurethan) und/oder XPS (Polystyrol) oder aus einem mineralischem Werkstoff, insbesondere aus Mineralwolle oder aus Aerogel oder aus gefällter (hochdisperser) Kieselsäure oder aus pyrogener Kieselsäure oder aus gehärtetem Leichtbeton, insbesondere aus Porenbeton, bestehen.

15. Wärmedämmende Bauplatte (1) nach einem der vorhergehenden Ansprüche,
**dadurch gekennzeichnet, dass**
die Kernplatten (3) Vakuumisolationspaneele (VIP) sind.

16. Wärmedämmende Bauplatte (1) nach einem der vorhergehenden Ansprüche,
**dadurch gekennzeichnet, dass**
die Bauplatte (1) als Bewehrungsmittel (12) Bewehrungsmatten (13) und/oder Bewehrungskörbe (14) und/oder Bewehrungsstäbe aufweist, wobei vorzugsweise die Kernplatten (3) in den Bewehrungskörben (14) angeordnet sind.

17. Wärmedämmende Bauplatte (1) nach einem der vorhergehenden Ansprüche,
**gekennzeichnet durch**
folgende Abmessungen:
Länge: zwischen 100 und 850 cm, insbesondere zwischen 250 und 650 cm
Breite: zwischen 40 und 100 cm, insbesondere zwischen 50 und 80 cm
Höhe: zwischen 15 und 60 cm, insbesondere zwischen 25 und 50

18. Verfahren zur Herstellung einer Bauplatte (1) nach einem der vorhergehenden Ansprüche mit folgenden Verfahrensschritten:
a) Umgießen zumindest einer Kernplatte (3) und zumindest eines Bewehrungsmittels (12) mit Frischmasse (24) des Hüllwerkstoffes,
b) Erhärten der Frischmasse (23), insbesondere mittels Dampfdruck.

19. Verfahren zur Herstellung einer Bauplatte (1) nach Anspruch 18, in einer quaderförmigen, nach oben offenen Gießform (16) mit einer Bodenwandung (17), zwei Seitenwandungen (18) und zwei Stirnwandungen, mit folgenden Verfahrensschritten:
a) Positionieren und Halten der Kernplatte(n) (3) derart in der Gießform (16), dass die Kernplatte(n) (3) die Wandungen (17;18) der Gießform (16) nicht berührt (berühren),
b) Positionieren und Halten des zumindest einen Bewehrungsmittels (12) in der Gießform (16),
c) Einfüllen einer gießfähigen Frischmasse (24) des Hüllwerkstoffes,
d) Ansteifen und vorzugsweise auftreiben lassen der Frischmasse (24),
e) Erhärten lassen der Frischmasse (23), insbesondere mittels Dampfdruck.

20. Verfahren nach Anspruch 19.
**dadurch gekennzeichnet, dass**
die Kernplatten (3) jeweils in einen Bewehrungskorb (14) eingelegt werden und mit diesem in der Gießform (16) positioniert werden.

21. Verfahren nach Anspruch 19 oder 20.
**dadurch gekennzeichnet, dass**
die Kernplatten (3) in der Gießform (16) mittels Plattenhaltemitteln (22) fixiert werden.

22. Verfahren nach Anspruch 21.
**dadurch gekennzeichnet, dass**
in einem ersten Schritt zunächst nur so viel Frischmasse (24) eingefüllt wird, dass die Kernplatte(n) (3) nicht bedeckt sind, anschließend dieser erster Teil der Frischmasse (24) ansteifen und gegebenenfalls auftreiben gelassen wird, nach dem Ansteifen die Plattenhaltemittel entfernt werden und der übrige Teil der Frischmasse (24) in die Gießform (16) eingefüllt wird und dieser ansteifen und gegebenenfalls auftreiben gelassen wird.

23. Vorrichtung zur Herstellung einer Bauplatte (1) nach einem der vorhergehenden Ansprüche nach dem Verfahren gemäß einem der Ansprüche 19 bis 22, aufweisend
a) eine quaderförmige, nach oben offene Gießform (16) mit einer Bodenwandung (17), zwei Seitenwandungen (18) und zwei Stirnwandungen und
b) zumindest ein Plattenhaltemittel (22) zum Positionieren der Kernplatte(n) (3) derart in der Gießform (16), dass die Kernplatten (3) die Wandungen (17;18) der Gießform (16) nicht berühren
c) zumindest ein Bewehrungshaltemittel (21) zum Positionieren des zumindest einen Bewehrungsmittels (12) in der Gießform (16).
